# EUROPÄISCHE PATENTSCHRIFT

(11) **EP 0 390 962 B1**
(45) Veröffentlichungstag und Bekanntmachung des Hinweises auf die Patenterteilung: **13.04.1994**
(21) Anmeldenummer: 89111505.7
(22) Anmeldetag: 23.06.1989
(51) Int. Cl.: C04B 30/02

(54) **Formteil auf Mineralwollebasis und Verfahren zur Herstellung desselben**
Shaped article based on mineral wool and process for its fabrication
Produit moulé à base de laine minérale et son procédé de fabrication

(30) Priorität: 04.04.1989 DE 3910860
(43) Veröffentlichungstag der Anmeldung: 10.10.1990
(73) Patentinhaber: Grünzweig + Hartmann AG, D-67059 Ludwigshafen (DE)
(72) Erfinder: Kummermehr, Hans, D-6700 Ludwigshafen (DE); Müller, Georg, Dr., D-6940 Weinheim (DE)
(74) Vertreter: Bockhorni, Josef, Dipl.-Ing.

(56) Entgegenhaltungen:
- EP-A- 0 291 646
- DE-A- 2 934 677
- GB-A- 2 170 234
- US-A- 4 668 590

## Beschreibung

Die Erfindung betrifft ein Formteil auf Mineralwollebasis gemäß dem Oberbegriff des Patentanspruches 1 sowie ein Verfahren zur Herstellung eines solchen Formteils gemäß dem Oberbegriff des Patentanspruches 8.

Formteile auf Mineralwollebasis, wie insbesondere Platten zur Verkleidung von Gegenständen oder Schalen zur Ummantelung von Rohren werden im allgemeinen dadurch hergestellt, daß Mineralwolle in einer Aufschlämmung eines Bindemittels aufgeschlossen und die dergestalt aufbereitete Mineralwolle auf einem Absaugeband oder in einer Form nach einem Vakuumsaugverfahren entwässert und getrocknet wird. Es ist bekannt, als Bindemittel Kieselsol und Stärke zu verwenden. Als Mineralwolle eignen sich hierbei Steinwolle, Glaswolle, Aluminiumsilikatwolle und dergleichen sowie Kombinationen hiervon.

Dieses Verfahren erlaubt es auch, Mineralwolle durchgehend einzufärben, so daß entsprechend gefärbte Formteile hergestellt werden können. Die Einfärbung der Mineralwolle wird dadurch erreicht, daß der Aufschlämmung Farbe zugegeben wird. Im Falle der Schwarzfärbung des Formteils gibt man geeignete Schwärzungsmittel der Aufschlämmung zu, wie beispielsweise Aktivkohle, Ruß oder Druckerschwärze.

Um nach diesem bekannten Verfahren eine gleichmäßige Bindungswirkung durch die zugegebenen Bindemittel zu erzielen und/oder eine gleichmäßige Einfärbung des Endproduktes zu gewährleisten, ist es erforderlich, das Kieselsol und die Stärke einschließlich der entsprechenden Farbpigmente in ausreichender Menge dem Wasser zuzugeben, um eine entsprechende Anlagerung der Feststoffpartikel an den Mineralfasern zu erhalten. In der Praxis hat diese Verfahrensweise allerdings zur Folge, daß stets mit einem Überschuß an Bindemittel gearbeitet wird, so daß nach Entnahme der aufgeschlossenen Mineralwolle aus der Aufschlämmung ein nicht vernachläßigbarer Restgehalt an Bindemittel im Wasser verbleibt. Abgesehen davon, daß es infolge des Überschusses an Bindemittel in der Aufschlämmung zu Kolloidbildungen und somit zu einer Verdickung der Aufschlämmung kommt, die einer gleichmäßigen Verteilung und Anlagerung an der Mineralwolle nicht förderlich ist, vielmehr einer solchen entgegenwirkt, kommt es infolge der Restgehalte an Bindemittel im Wasser bei längeren Stillstandszeiten, wie etwa über das Wochenende, zu einem Faulen der Aufschlämmung durch Mikroorganismen, so daß die Aufschlämmung jeweils neu mit einem entsprechenden Aufwand angesetzt werden muß. Im Falle der Einfärbung des Formteiles muß das Abwasser, welches erheblich mit Farbteilchen beladen ist, aus Gründen des Umweltschutzes gesondert aufbereitet werden, insbesondere einen gesonderten Filterungs- und Abscheideprozeß durchlaufen. Neben dem erhöhtem Materialaufwand bedingt durch den Überschuß an Bindemittel und Farbpigmenten muß folglich auch ein erhöhter Arbeits- und Kostenaufwand für die Entsorgung des Restwassers in Kauf genommen werden. Beim Endprodukt ist, insbesondere wenn es durchgefärbt werden soll, festzustellen, daß die Mineralfasern häufig mit Feststoffpartikeln verschmiert sind. Dies hat wiederum eine Verschlechterung der gewünschten Eigenschaften des Endprodukts zur Folge.

Generell ist es zur Anlagerung von Teilchen an Mineralwollefasern bekannt, diese Teilchen einer Aufschlämmung beizugeben (US-PS 4 668 590), wobei es sich bei den Teilchen um kolloidales Siliziumdioxid handelt. Es ist ferner bekannt, aus Mineralwollfasern hergestellten Teilen bestimmte Eigenschaften dadurch zu verleihen, daß Feststoffpartikel an die Mineralwollfasern angelagert werden (DE-A 29 34 677). Hierbei werden infrarotabsorbierende Teilchen als Pulver entweder dem Kühlwasser zugegeben, mit dem die beim Faserbildungsprozeß in der Filzkammer gesammelten Fasern gekühlt werden, oder es wird als Pulver pneumatisch in die Filzkammer eingeblasen, in der die Mineralwollfasern erzeugt werden.

Aufgabe der Erfindung ist es, ein Formteil auf Mineralwollebasis zu schaffen, bei dem durch eine stabile und gleichmäßige Anlagerung von Feststoffpartikeln am Formteil bestimmte Eigenschaften eingestellt werden können. Hierbei soll eine gute Verteilung des Bindemittels sowie eine gleichmäßige und stabile Anlagerung der Feststoffpartikel an den Mineralfasern bei sparsamer Verwendung der Bindemittelkomponenten erfolgen. Ferner soll ein Verfahren zum Aufbereiten von Mineralwolle zur Herstellung von Formteilen geschaffen werden, mit welchem in einfacher und schneller Weise eine gute und rückstandsfeie Anlagerung von Feststoffteilchen und Bindemittel an den Mineralfasern gewährleistet ist.

Diese Aufgabe wird für das Formteil durch die im kennzeichnenden Teil des Anspruches 1 enthaltenen Merkmale und für das Verfahren durch die im kennzeichnenden Teil des Anspruches 8 enthaltenen Merkmale gelöst, wobei zweckmäßige Weiterbildungen des Formteils und des Verfahrens durch die in den Unteransprüchen enthaltenen Merkmale gekennzeichnet sind.

Nach Maßgabe der Erfindung wird ein Formteil auf Mineralwollebasis geschaffen, bei dem an die mit Bindemittel aus vorzugsweise aus einer Aufschlämmung beladenen Mineralfasern inselartig Feststoffpartikel fest angelagert sind. Die mittlere Partikelgröße der Feststoffpartikel beträgt hierbei im besonderen ≦ 4 µm. Überraschend hat es sich gezeigt, daß durch eine inselartige Anlagerung der Feststoffpartikel an die Mineralfasern sich in hervorragender Weise bestimmte Eigenschaften des Formteils einstellen lassen. Beispielsweise kann ein Formteil geschwärzt werden, indem die Farbpartikel inselartig an die Mineralfasern angelagert werden, wobei die inselartige Anlagerung völlig ausreicht, um eine gewünschte, gleichmäßige und gute Durchfärbung der Mineralwolle, etwa durch Schwärzung zu erreichen und es nicht erforderlich ist, die Mineralfasern vollständig mit Farbe zu beschichten. Dies trifft ebenso für die Einstellung anderer Eigenschaften des Formteils zu, wie etwa Erhöhung der Strahlungsabsorption, sofern die für diese Eigenschaften verantwortlichen Feststoffpartikel inselartig angelagert sind. Es lassen sich somit in sehr einfacher Weise durch Anlagerung Formteile mit über den gesamten Querschnitt gleichmäßigen bestimmten Eigenschaften erzielen. So kann beispielsweise durch Anlagerung von Ton an Mineralfasern ein Formteil mit sehr hoher Temperaturbeständigkeit hergestellt werden, welches sich insbesondere für eine Auskleidung von Schalldämpfern eignet. Durch Anlagerung von Aktivkohle lassen sich Wasser- oder Gasfilter herstellen. Durch Anlagerung von Säuren, Basen, Metallen und deren Oxiden lassen sich Katalysatoren mit genau einstellbaren Eigenschaften herstellen. Durch die Anlagerung von leitfähigem Ruß oder Graphit lassen sich Mikrowellenabsorber, insbesondere Radarwellenabsorber herstellen, so daß sich dadurch in einfacher Weise Verkleidungsplatten herstellen lassen, mit denen Gebäude und dergleichen gegen Radarwellen abgeschirmt werden können.

Durch die inselartige Anlagerung von Feststoffpartikeln verringert sich auch der Herstellungsaufwand beträchtlich, weil man nunmehr mit einem geringeren Anteil an Bindelmittel und Feststoffpartikeln auskommt als es zur Erreichung einer vollständigen Beschichtung der Mineralwolle der Fall wäre, wo mit einem erheblichen Überschuß an Bindemittel und den anzulagernden Festkörperteilchen in der Aufschlämmung gearbeitet werden muß. Ferner wird jegliches Verschmieren der Mineralfasern aufgrund eines übermäßigen Anteils an Bindemittel und anzulagernden Festkörperteilchen ausgeschlossen und damit auch die Gefahr, daß aufgrund des Verschmierens der Mineralfaser Bereiche mit ungleichmäßigen Anlagerungen in der Mineralwolle entstehen. Tatsächlich läßt sich mit der inselartigen Anlagerung der Feststoffpartikel ein Formteil mit sehr gleichmäßigen Eigenschaften erzielen. Die mittlere Partikelgröße ≦ 4 µm berücksichtigt den Umstand, daß sich Partikel, die dieser Größenbedingung Rechnung tragen, in hervorragender Weise inselartig an den Mineralfasern anlagern lassen. Vorzugsweise beträgt der Bereich der mittleren Partikelgröße 1 - 4 µm, insbesondere 1 - 3 µm, wobei jedoch bei Anlagerung von Farbstoffen im Molekularbereich diese Bereiche unterschritten werden können, jedoch die Bedingung für die mittlere Teilchengröße ≦ 4 µm erfüllt wird.

Zur Anlagerung der Feststoffpartikel eignen sich organische und anorganische Substanzen als Transportmittel, wobei die organischen und anorganischen Substanzen zweckmäßigerweise zu einer Aufschlämmung aufgearbeitet werden, in der die Mineralwolle aufgeschlossen wird. Die Transportmittel bilden hierbei auch die Bindemittel, so daß keine gesonderte Bindemittelzugabe erforderlich ist.

Zweckmäßerweise sind die organischen und anorganischen Substanzen kationischer und/oder anionischer Natur.

In besonders zweckmäßiger Weise ist die organische Substanz durch Tylose und/oder Stärke und die anorganische Substanz durch Kieselsol gebildet. Dem Gemisch aus Tylose, Kieselsol und/oder Stärke kommt hierbei Bindelmittelfunktion zu. Bei Verwendung von Tylose kann die mengenmäßige Zugabe gegenüber Stärke um den Faktor 10 reduziert werden, so daß sich bei Verwendung von Tylose Formteile herstellen lassen, die unter die Kategorie der Brandklasse A1 fallen.

Durch eine Anlagerung von Thermoplasten oder Duroplasten an die Mineralfasern läßt sich die Festigkeit der Formteile erhöhen. Durch Anlagerung von Silikon an Mineralfasern läßt sich ein besonders wasserabweisendes Formteil herstellen, welches beständig gegenüber Feuchtigkeit ist. Durch Anlagerung von Ton ergibt sich ein Formteil mit erhöhter Temperaturbeständigkeit. Bei einer Anlagerung von Graphitpartikeln lassen sich die Leiteigenschaften verbessern. Durch Anlagerung von Metallen können Katalysatoren sowie Formteile mit erhöhter Strahlungsreflektion hergestellt werden. Durch Anlagerung von Metalloxiden ergeben sich Katalysatoren und Formteile mit erhöhter Strahlungsabsorption. Dies läßt sich auch durch Anlagerung von Säuren oder Basen erreichen. Durch Anlagerung von Aluminiumhydroxid, bzw. anderen Stoffen mit erhöhtem Kristallwassergehalt, lassen sich Formteile herstellen, die dem Feuerschutz dienen, etwa Platten für den Einsatz in Brandschutztüren und dergleichen. Dabei genügt eine inselartige Anlagerung, also eine punktweise Anlagerung der Partikel an den Mineralfasern, um die gewünschten Eigenschaften des Formteils zu erreichen.

Eine Verfeinerung der Beladung des Formteils mit Feststoffpartikeln wird durch eine mehrlagige Anordnung der Feststoffpartikel erreicht. So können beispielsweise in einer ersten Lage Tonteilchen und in einer zweiten Lage Farbteilchen oder umgekehrt angelagert sein. Es läßt sich allerdings auch eine mehrlagige Anlagerung derselben Feststoffpartikel realisieren.

Für das erfindungsgemäße Verfahren ist maßgeblich, daß sich eine hervorragende Anlagerung und Verteilung in der Mineralwolle, insbesondere auch des Bindemittels, dadurch erreichen läßt, daß für die Aufschlämmung ein Medium, vorzugsweise Wasser verwendet wird, dessen Leitfähigkeit auf einen Wert von mindestens 700 µS/cm, vorzugsweise auf mindestens 800 µS/cm eingestellt wird. Mit dieser Einstellung der Leitfähigkeit des Wassers ist eine einwandfreie Anlagerung von Bindemittel und sonstigen Festkörperteilchen an die Mineralwolle möglich, ohne daß in der Aufschlämmung mit einem Überschuß an Kieselsol, Stärke und/oder Tylose und/oder sonstigen anzulagernden Festkörperteilchen gearbeitet werden muß. Vielmehr werden beim Einhalten eines solchen Grenzwerts für die Leitfähigkeit sämtliche in der Aufschlämmung aus Wasser befindlichen Komponenten an die Mineralfasern transportiert und dort angelagert, so daß praktisch keinerlei Rückstände im Wasser bleiben. Es ergibt sich somit eine sehr vorteilhafte Materialeinsparung, insbesondere aber auch eine Verringerung des Arbeitsaufwandes bei der Herstellung, da aufwendige Entsorgungsmaßnahmen für das verbleibende Wasser entfallen können.

In einer besonders vorteilhaften Ausgestaltung des Verfahrens wird die Leitfähigkeit des Wassers auf einen Wert im Bereich von 900 bis 1000 µS/cm eingestellt. Die Einstellung der Leitfähigkeit des Wassers erfolgt in vorteilhafter Weise durch Zugabe von die Leitfähigkeit des Wassers erhöhenden Mitteln, insbesondere Metallsalzen, beispielsweise Magnesiumsulfat.

Es werden in die Aufschlämmung Feststoffpartikel mit einer mittleren Größe von ≦ 4 µm zugegeben. Durch diese Feststoffpartikel lassen sich in der bereits beschriebenen Weise bestimmte Eigenschaften von Formteilen in gewünschter Weise einstellen. Hierbei eignen sich insbesondere Ton, Farbe, Kohlenstoff in verschiedenen Modifikationen, Thermoplaste, Duroplaste, Säuren, Basen, Metalle, Metalloxide, Silikone, Stoffe mit hohem Kristallwassergehalt und dergleichen mehr. Die Schnelligkeit der Anlagerung wird schließlich noch dadurch begünstigt, daß die Bestandteile der Aufschlämmung unter Rühren zugegeben werden.

In besonders vorteilhafter Weise ist eine mehrlagige Anlagerung von Feststoffpartikeln an den Mineralfasern möglich, indem in einer ersten Stufe eine Aufschlämmung aus Wasser, dem Transportmittel, zweckmäßigerweise Tylose und/oder Stärke und Kieselsol einschließlich der anzulagernden Feststoffpartikel gemischt und die Mineralwolle zugegeben wird, wobei sämtliches Bindemittel und auch die eingebrachten anzulagernden Feststoffpartikel inselartig an die Mineralfasern angelagert werden, ohne daß Rückstände im Wasser verbleiben. In einer zweiten Stufe können dann erneut Tylose und/oder Stärke und Kieselsol sowie weitere anzulagernde Feststoffpartikel in das Wasser gegeben werden, so daß dann in einer weiteren zweiten Stufe die Anlagerung von Bindemittel mit sonstigen Feststoffpartikeln an den bereits beladenen Mineralfasern erfolgt. Bei Bedarf können noch zusätzliche Stufen durchgeführt werden.

Die mengenmäßige Dosierung der einzelnen Bestandteile erfolgt in sehr einfacher Weise dadurch, daß bei der Aufschlämmung Tylose und/oder Stärke jeweils so lange zugegeben wird, bis sämtliche Feststoffpartikel an die Mineralfasern angelagert sind.

In einer praktischen Ausführungsform wird in einen Behälter mit einem Fassungsvermögen von etwa 5500 Liter die aufzuschließende Mineralwolle in das in den Behälter eingefüllte Wasser gegeben. Unter ständigem Rühren werden die weiteren Komponenten der Aufschlämmung zugegeben, nämlich Kieselsol und Tylose bzw. Stärke sowie die anzulagernden Feststoffpartikel. Falls beispielsweise eine Schwarzfärbung der Mineralwolle und damit des aus der Mineralwolle hergestellten Formteils erreicht werden soll, wird Farbe, Aktivkohle oder Ruß der Aufschlämmung zugegeben, insbesondere zugleich mit der Tylose eingerührt. Dies hat zur Folge, daß die anzulagernden Feststoffpartikel, hier Farbpigmente, zusammen mit dem Bindemittel an die Fasern wandern und dort angelagert werden. Unter dem Mikroskop ist feststellbar, daß die Anlagerung inselartig, insbesondere in Form von Punkten an den Mineralfasern erfolgt.

Falls die Temperaturbeständigkeit des aus der Mineralwolle hergestellten Formteils erhöht werden soll, so wird der Aufschlämmung Ton zugegeben, wobei dann die Tonteilchen zugleich mit dem Bindemittel an die Fasern unter Anlagerung wandern.

Die Ausflockung der Fasern und damit eine Verbesserung der Verwendung der Wolle wird insbesondere noch dadurch begünstigt, daß bei einer Anreicherung der Mineralfasern mit Ton der Ton zusammen mit Kartoffelstärke der Aufschlämmung zugegeben wird.

Als Tylose wird zweckmäßigerweise Methylzellulose verwendet. Anstelle von Tylose kann auch Stärke verwendet werden. Es ist auch möglich, der Aufschlämmung aus Wasser und Kieselsol Tylose und Stärke zuzugeben. Wesentlich ist, daß die Leitfähigkeit des Wasser durch Zugabe von die Leitfähigkeit erhöhenden Mitteln auf einen Wert von mindestens 700 µS/cm, zweckmäßigerweise mindestens 800 µS/cm, und bevorzugt auf einen Wert im Bereich von 900 bis 1000 µS/cm eingestellt wird, wozu sich als Zugabe insbesondere Metallsalze, etwa Magnesiumsulfat, eignen. Sobald die Leitfähigkeit des Wassers für die Aufschlämmung auf den geeigneten Wert der Leitfähigkeit gebracht ist, kommt es nach Zusetzen von Kieselsol und Tylose bzw. Stärke zur Anlagerung an die Mineralfasern, ohne daß mit einem Überschuß dieser Komponenten gearbeitet werden muß. Gleichzeitig ist sichergestellt, daß zusätzliche Feststoffpartikel, die dem Formteil bestimmte Eigenschaften, wie Temperaturbeständigkeit und dgl. verleihen sollen, zusammen mit dem Bindemittel an die Mineralfasern wandern, so daß auch insoweit nur soviel Feststoffpartikel der Aufschlämmung zugegeben werden müssen, wie für die Anlagerung an die Mineralfasern gewünscht wird. Nach dem Anlagern an die Mineralfasern ist das verbleibende Wasser völlig rein und muß nach Entnahme der Mineralwolle allenfalls einem Filterungsprozeß unterzogen werden, um im Wasser noch vorhandene Mineralfaserteilchen rückzugewinnen. Dadurch ist es auch möglich, die Anlagerung in mehreren Stufen durchzuführen, weil bei der Aufschlämmung lediglich die für die Bindungswirkung maßgeblichen Komponenten, nämlich Kieselsol und Tylose und/oder Stärke zugegeben werden müssen in Verbindung mit für den in der zweiten Stufe ansonsten noch anzulagernden Feststoffpartikeln, etwa Ton, Farbstoffe und dergleichen. Bei Bedarf können auch weitere Stufen nachgeschaltet werden.

Obgleich die Anlagerung von Tonteilchen und von Farbteilchen beschrieben wurde, um die Temperaturbeständigkeit bei der aus der Mineralwolle hergestellten Formteile zu erhöhen oder eine entsprechende Durchfärbung des Endproduktes zu erreichen, können über die Aufschlämmung auch andere geeignete Feststoffpartikel an der Mineralwolle bzw. an den Mineralfasern angelagert werden, um entsprechend gewünschte Eigenschaften des Formteils zu erreichen. Beispielsweise kann zur Verbesserung der Strahlenabsorption oder zur Erhöhung der Leitfähigkeit eine Graphitanlagerung an den Mineralfasern durchgeführt werden, wozu entsprechende Graphitteilchen in die Aufschlämmung zum Aufschließen der Mineralwolle gegeben werden.

Bevorzugt werden die Feststoffpartikel in einer mittleren Teilchengröße von ≦ 4 µm zugegeben, wobei besonders bevorzugt ein Bereich zwischen 3 µm und 1 µm ist. Insbesondere bei einer Anlagerung von Farbstoffen können auch Partikel der Aufschlämmung zugegeben werden, deren Größe sich im Molekularbereich bewegt.

Nachfolgend werden drei Beispiele beschrieben, von denen Beispiel 1 die Aufbereitung von Mineralwolle zur Herstellung von Formteilen mit einer erhöhten Temperaturbeständigkeit, Beispiel 2 die Aufbereitung von Mineralwolle zur Herstellung von eingeschwärzten Formteilen und Beispiel 3 die Aufbereitung von Mineralwolle zur Herstellung von Mikrowellenabsorbern widergibt. (Angaben jeweils in Gewichtsprozent).

### Beispiel 1:

Die Aufschlämmung ist gebildet in Gewichtsprozenten aus
98,939 % H₂O
0,0989 % MgSO₄
0,0074 % Tylose
0,5194 % Mineralwolle
0,0890 % Ton
0,3463 % Kieselsol

### Beispiel 2:

Die Aufschlämmung ist gebildet in Gewichtsprozenten aus
99,000 % H₂ O
0,0742 % MgSO₄
0,0396 % Stärke
0,5399 % Mineralwolle
0,3467 % Kieselsol
0,00248 % Fakunylschwarz

### Beispiel 3:

Die Aufschlämmung ist gebildet in Gewichtsprozenten aus
98,76 % H₂O
0,09876 % MgSo₄
0,37035 % leitfähige Rußsuspension (10%ig)
0,00493 % Tylose
0,02469 % anionisches Kieselsol (40%ig)
0,34566 % kationisches Kieselsol (30%ig)
0,54318 % Mineralwolle
Beispiel 3 eignet sich insbesondere für Mikrowellenabsorber.

## Patentansprüche

1. Insbesondere durch ein Vakuumverfahren hergestelltes Formteil auf Mineralwollebasis, bei dem durch Zugabe von Feststoffpartikeln in eine Aufschlämmung aus einem flüssigen Medium und Bindemittel zum Aufschließen der Mineralwolle und durch Anlagerung der Feststoffpartikel in der Aufschlämmung an die Mineralfasern bestimmte Eigenschaften des Formteils eingestellt und die Mineralfasern durch das in der Aufschlämmung enthaltene Bindemittel zu dem Formteil gefestigt sind, **dadurch gekennzeichnet,** daß die Feststoffpartikel an die Mineralfasern unter Verwendung eines die Leitfähigkeit des flüssigen Mediums der Aufschlämmung erhöhenden Mittels inselartig mit einer mittleren Partikelgröße ≦ 4 µm fest angelagert sind.

2. Formteil nach Anspruch 1, **dadurch gekennzeichnet**, daß als Transportmittel für die Anlagerung der Feststoffpartikel organische und anorganische Substanzen verwendet sind.

3. Formteil nach Anspruch 2, **dadurch gekennzeichnet**, daß die organischen und anorganischen Substanzen kationischer und/oder anionischer Natur sind.

4. Formteil nach einem der vorhergehenden Ansprüche, **dadurch gekennzeichnet,** daß die organische Substanz durch Tylose und/oder Stärke und die anorganische Substanz durch Kieselsol gebildet ist.

5. Formteil nach einem der vorhergehenden Ansprüche, **dadurch gekennzeichnet,** daß die Feststoffpartikel aus Kohlenstoff verschiedener Modifikation, Ton, Farbe, Thermoplaste, Duroplaste, Säuren, Basen, Metalle, Metalloxide, Silikone und/oder Stoffe mit hohem Kristallwassergehalt gebildet sind.

6. Formteil nach einem der vorhergehenden Ansprüche, **dadurch gekennzeichnet,** daß zur Bildung des Formteils als Radarwellenabsorber leitfähiger Ruß und/oder Graphit als Feststoffpartikel verwendet ist.

7. Formteil nach einem der vorhergehenden Ansprüche, **dadurch gekennzeichnet,** daß die Feststoffpartikel mehrlagig angeordnet sind.

8. Verfahren zur Herstellung eines Formteils auf Mineralwollebasis nach einem der Ansprüche 1 bis 7, bei dem in einer Aufschlämmung aus einem flüssigen Medium und Bindemittel Mineralwolle aufgeschlossen wird, **dadurch gekennzeichnet,** daß als flüssiges Medium für die Aufschlämmung ein solches mit einer Leitfähigkeit von mindestens 700 µ S/cm, vorzugsweise 800 µ S/cm verwendet wird.

9. Verfahren nach Anspruch 8, **dadurch gekennzeichnet,** daß als leitfähiges Medium Wasser verwendet wird.

10. Verfahren nach Anspruch 9, **dadurch gekennzeichnet,** daß der Aufschlämmung Feststoffpartikel mit einer mittleren Größe von ≦ 4 µm zugegeben werden.

11. Verfahren nach einem der Ansprüche 8 bis 10, **dadurch gekennzeichnet,** daß zur mehrlagigen Anlagerung von Feststoffpartikeln an Mineralfasern die Transportmittel sowie Feststoffpartikel der Aufschlämmung in aufeinanderfolgenden Stufen zugegeben werden.

12. Verfahren nach einem der vorhergehenden Verfahrensansprüche, **dadurch gekennzeichnet,** daß der Aufschlämmung die Transportmittel so lange zugegeben werden, bis sämtliche Feststoffpartikel an die Mineralfasern angelagert sind.

13. Verfahren nach einem der vorhergehenden Verfahrensansprüche, **dadurch gekennzeichnet**, daß dem Wasser zur Erhöhung der Leitfähigkeit Metallsalze, insbesondere Magnesiumsulfat zugegeben wird.

## Claims

1. A shaped article based on mineral wool and fabricated particularly by a vacuum process in which, by means of the addition of solid substance particles into a suspended paste made of a liquid agent and an agglutinant for reducing the mineral wool, and by means of the accumulation of the solid substance particles in the suspended paste on to the mineral fibres, certain properties of the shaped article are set in place, said mineral fibres being attached to the shaped article by the agglutinant contained in the suspended paste, characterised in that the solid substance particles, with an average particle size of ≦ 4 µm, are firmly located on the mineral fibres in random isolated groups by use of an agent to increase the conductivity of the liquid agency of the suspended paste.

2. A shaped article according to Claim 1, characterised in that organic and inorganic substances are used as transportational agents for the accumulation of the solid substance particles.

3. A shaped article according to Claim 2, characterised in that the organic and inorganic substances are of cationic and/or anionic nature.

4. A shaped article according to one of the preceding claims, characterised in that the organic substance is formed by a tylotic and/or a concentrate and the inorganic substance by siliceous salt.

5. A shaped article according to one of the preceding claims, characterised in that the solid substance particles are formed of carbon in various modifications, kaolin, pigment, thermoplasts, duroplasts, acids, alkalis, metals, metal oxides, silicones and/or substances with a high content of crystallisation water.

6. A shaped article according to one of the preceding claims, characterised in that conductive soot-black and/or graphite is used as the solid substance particles, in order to construct the shaped article as a radar wave absorber.

7. A shaped article according to one of the preceding claims, characterised in that the solid substance particles are set in a multi-layered arrangement.

8. A process for the fabrication of a shaped article based on mineral wool according to one of the Claims 1 to 7, in which mineral wool is reduced in a suspended paste made of a liquid agent and an agglutinant, characterised in that, for the suspended paste, a liquid agent such as one with a conductivity capacity of at least 700 µ S/cm, or preferably 800 µ S/cm, is used.

9. A process according to Claim 8, characterised in that water is used as a conductive agent.

10. A process according to Claim 9, characterised in that solid substance particles with an average size of ≦ 4 µm are added to the suspended paste.

11. A process according to one of the Claims 8 to 10, characterised in that, for the multi-layered accumulation of solid substance particles on the mineral fibres, the transportational agents as well as the solid substance particles are added to the suspended paste in successive stages.

12. A process according to one of the preceding process claims, characterised in that the transportational agents are added continuously to the suspended paste until all the solid substance particles are located in accumulation on the mineral fibres.

13. A process according to one of the preceding process claims, characterised in that metallic salts, particularly magnesium sulphate, are added to the water to increase the conductivity capacity.

## Revendications

1. Produit moulé à base de laine minérale, fabriqué en particulier par un procédé à vide et pour lequel l'addition de particules de matières solides dans une suspension composée d'un milieu liquide et d'un liant destiné à dissoudre la laine minérale et la fixation par addition des particules de matières solides aux fibres minérales dans la suspension permettent d'établir certaines propriétés et de renforcer les fibres minérales par l'intermédiaire du liant destiné au produit moulé et contenu dans la suspension, caractérisé en ce que les particules de matières solides sont fixées solidement par addition aux fibres minérales, comme une île, en utilisant un agent qui augmente la conductibilité du milieu fluide de la suspension et avec une grosseur moyenne de particule ≦ 4 µm.

2. Produit moulé selon la revendication 1, caractérisé en ce que des substances organiques et inorganiques sont utilisées en tant qu'agents de transport pour la fixation des particules de matières solides par addition.

3. Produit moulé selon la revendication 2, caractérisé en ce que les substances organiques et inorganiques sont de nature cationique et/ou anionique.

4. Produit moulé selon l'une des revendications précédentes, caractérisé en ce que la substance organique est constituée par de la cellulose méthylique et/ou de l'amidon et la substance inorganique par du sol silicique.

5. Produit moulé selon l'une des revendications précédentes, caractérisé en ce que les particules de matières solides sont formées à partir de carbone sous différentes formes, à partir d'argile, de colorant, de thermoplastiques, de résines thermodurcissables, d'acides, de bases, de métaux, d'oxydes métalliques, de silicones et/ou de matières à teneur élevée en eau de cristallisation.

6. Produit moulé selon l'une des revendications précédentes, caractérisé en ce que, pour la formation du produit moulé en tant qu'absorbeur d'ondes de radar, du noir de carbone et/ou du graphite sont utilisés en tant que particules de matières solides.

7. Produit moulé selon l'une des revendications précédentes, caractérisé en ce que les particules de matières solides sont disposées en plusieurs épaisseurs.

8. Procédé de fabrication d'un produit moulé à base de de laine minérale selon l'une des revendications 1 à 7, pour lequel de la laine minérale est dissoute dans une suspension composée d'un milieu liquide et de liant, caractérisé en ce que, en tant que milieu liquide pour la suspension, est utilisé un milieu d'une conductibilité d'au moins 700 µ S/cm et de préférence 800 µ S/cm.

9. Procédé selon la revendication 8, caractérisé en ce que de l'eau est utilisée en tant que milieu conducteur.

10. Procédé selon la revendication 9, caractérisé en ce que des particules de matières solides d'une grosseur moyenne de ≦ 4 µm sont additionnées à la la suspension.

11. Procédé selon l'une des revendications 8 à 10, caractérisé en ce que, pour la fixation de particules de matières solides à des fibres minérales, par addition en plusieurs couches, les agents de transport ainsi que les particules de matières solides sont ajoutés à la suspension par étapes successives.

12. Procédé selon l'une des revendications précédentes relatives au procédé, caractérisé en ce que les agents de transport sont ajoutés à la suspension jusqu'à ce que l'ensemble des particules soient fixées aux fibres minérales par addition.

13. Procédé selon l'une des revendications précédentes, caractérisé en ce que des sels métalliques, en particulier du sulfate de magnésium sont ajoutés à l'eau pour augmenter la conductibilité.
